Europäisches Patentamt

European Patent Office

Office européen des brevets

(19)

(11) **EP 1 626 258 A1**

(12) **DEMANDE DE BREVET EUROPEEN**

(43) Date de publication:
**15.02.2006 Bulletin 2006/07**

(51) Int Cl.:
***G01K 7/01*** *(2006.01)*

(21) Numéro de dépôt: **05291701.0**

(22) Date de dépôt: **09.08.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **12.08.2004 FR 0408853**

(71) Demandeur: **STMicroelectronics SA**
**92120 Montrouge (FR)**

(72) Inventeurs:
• **Duval, Benjamin**
  **83490 Saint Maximin (FR)**
• **Pomet, Alain**
  **13790 Rousset (FR)**

(74) Mandataire: **Bentz, Jean-Paul**
**Novagraaf Technologies,**
**122, rue Edouard Vaillant**
**92593 Levallois-Perret Cedex (FR)**

(54) **Circuit électronique équipé pour évaluer sa température**

(57)    L'invention concerne notamment un circuit électronique (CE) doté d'un oscillateur (OSC_1) délivrant un signal (S1) de fréquence (F1) variable avec la température (Tc) de ce circuit, et recevant ou délivrant un signal (S2) de fréquence (F2) fixe et connue.

Ce circuit comprend un module de mesure (MSR) délivrant un signal de mesure (Φ1) représentatif de la fréquence variable (F1) évaluée sur la base du signal (S2) à fréquence fixe pris comme référence ou étalon, et un module de conversion (CVRS) appliquant au signal de mesure (Φ1) une fonction de transfert inverse ($u^{-1}$, $v^{-1}$, $w^{-1}$) de la loi de variation en fonction de la température de la fréquence du premier signal (S1), pour produire un signal de sortie (Θc) représentatif de la température (Tc) du circuit.

Fig. 1

**EP 1 626 258 A1**

## Description

L'invention concerne, de façon générale, les techniques d'évaluation in situ de la température d'un circuit électronique.

Plus précisément, l'invention concerne, selon un premier de ses aspects, un circuit électronique doté d'un oscillateur délivrant en fonctionnement un premier signal oscillant à une première fréquence variant, en fonction de la température du circuit, suivant une loi monotone déterminée, ce circuit disposant en fonctionnement d'un deuxième signal oscillant à une deuxième fréquence connue et sensiblement indépendante de la température.

La détection de la température d'un circuit électronique peut s'avérer cruciale dans la mesure où l'intégrité physique et le fonctionnement correct d'un tel circuit ne peuvent être garantis que dans une plage de température déterminée, en dehors de laquelle le circuit peut, dans le meilleur des cas, produire des résultats aberrants avec des conséquences éventuellement graves.

Il est connu, pour surmonter ces difficultés, de prévoir des capteurs de température sur certains circuits électroniques.

Néanmoins, non seulement cette mesure oblige à augmenter de façon non négligeable la taille du circuit pour pouvoir y intégrer le capteur de température, mais en outre la qualité de la réponse de ce capteur s'avère relativement difficile à vérifier.

L'invention, qui se situe dans ce contexte, a pour but de proposer une technique permettant de s'affranchir de ces contraintes.

A cette fin, le circuit de l'invention, par ailleurs conforme à la définition générique qu'en donne le préambule ci-dessus, est essentiellement caractérisé en ce qu'il comprend un module de mesure recevant les premier et deuxième signaux oscillants et délivrant un signal de mesure de la première fréquence, obtenu en évaluant la première fréquence sur la base du deuxième signal oscillant pris comme référence ou étalon, et un module de conversion recevant le signal de mesure et produisant, en tant que signal de sortie représentatif de la température du circuit, le résultat d'une application, sur le signal de mesure, d'une fonction de transfert inverse liée à ladite loi monotone.

Le terme de "module" doit ici s'entendre au sens fonctionnel le plus large dans la mesure où l'homme du métier comprendra qu'un tel module pourra aussi bien être mis en oeuvre sous la forme matérielle d'une portion du circuit que sous une forme logicielle pour un circuit doté d'une unité centrale arithmétique et logique, ou même encore sous une forme hybride.

Dans son application privilégiée, le circuit électronique de l'invention constitue une carte à puce intelligente adaptée à une communication au standard USB.

Comme le sait l'homme de métier, l'acronyme USB (de l'anglais « Universal Serial Bus ») désigne un standard de bus série universel très largement répandu et utilisé dans le monde de la micro-informatique.

Le deuxième circuit oscillant peut être produit par un deuxième oscillateur prévu sur le circuit électronique lui-même.

Les première et deuxième fréquences peuvent avantageusement être du même ordre de grandeur, et par exemple égales, pour une température de fonctionnement déterminée du circuit.

L'invention, selon un deuxième de ses aspects, concerne un procédé d'évaluation de la température d'un circuit électronique produisant en fonctionnement un premier signal oscillant à une première fréquence variant, en fonction de la température du circuit, suivant une loi monotone déterminée, ce circuit produisant ou disposant en fonctionnement d'un deuxième signal oscillant à une deuxième fréquence connue et sensiblement indépendante de la température, et ce procédé étant caractérisé en ce qu'il comprend une première phase consistant à élaborer un signal de mesure de la première fréquence en mesurant la première fréquence au moyen du deuxième signal oscillant, et une deuxième phase consistant à élaborer un signal de sortie représentatif de la température du circuit en déterminant, au moyen de ladite loi monotone, à quelle température correspond le signal de mesure.

Le signal de mesure de la première fréquence peut par exemple être élaboré au moins en comptant le nombre d'oscillations que produit le premier signal oscillant pendant une période de temps définie par l'apparition d'un nombre prédéterminé d'oscillations du deuxième signal oscillant.

Cependant, le signal de mesure de la première fréquence peut aussi être élaboré au moins en comptant le nombre d'oscillations que produit le deuxième signal oscillant pendant une période de temps définie par l'apparition d'un nombre prédéterminé d'oscillations du premier signal oscillant.

L'invention est avantageusement applicable au cas où le circuit électronique dont la température doit être évaluée est constitué par une carte à puce intelligente.

Dans ce cas, en effet, la fiabilité de fonctionnement d'une telle carte constituant une exigence très forte, il est possible d'utiliser le signal représentatif de sa température pour prendre toute contre-mesure adéquate propre à influer sur son mode de fonctionnement, voire interdire ce dernier à l'apparition d'une température limite de fonctionnement.

D'autres caractéristiques et avantages de l'invention ressortiront clairement de la description qui en est faite ci-après, à titre indicatif et nullement limitatif, en référence aux dessins annexés, dans lesquels :

- la figure 1 est un schéma partiel et fonctionnel d'un circuit conforme à l'invention;

- la figure 2 représente les valeurs que prennent, en fonction de la température, les première et deuxième fréquences;

- les figures 3A et 3B représentent respectivement des chronogrammes des première et deuxième fréquences pour une première température T1 du circuit; et

- les figures 4A et 4B représentent respectivement des chronogrammes des première et deuxième fréquences pour une deuxième température T2 du circuit.

Comme annoncé précédemment, l'invention concerne notamment un circuit électronique CE dont la température Tc doit être déterminée.

Selon une application typique de l'invention, ce circuit électronique constitue une carte à puce intelligente adaptée à une communication de données au standard USB.

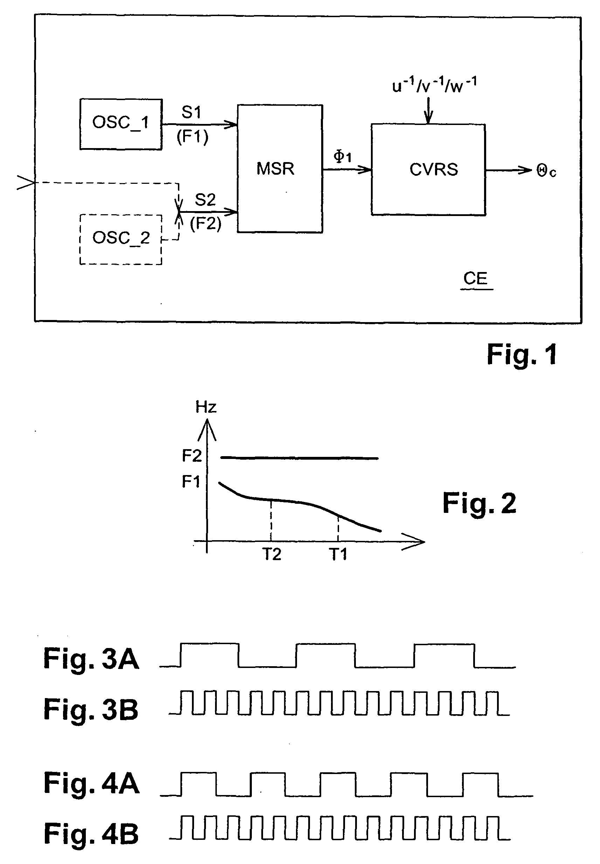

Ce circuit CE est doté d'un oscillateur OSC_1 délivrant en fonctionnement un signal oscillant S1 dont la fréquence F1 varie en fonction de la température Tc du circuit suivant une loi monotone, telle par exemple que celle illustrée à la figure 2.

Ce circuit CE dispose par ailleurs, en fonctionnement, d'un deuxième signal oscillant S2, par exemple produit par un oscillateur OSC_2 implanté sur ce circuit, et dont la fréquence F2 est connue et sensiblement indépendante de la température Tc.

Dans la mesure où la fréquence F2 est fixe et connue, donc assimilable à une constante, la loi qui lie la fréquence F1 à la température Tc peut s'écrire sous différentes formes, telles que :

$$\text{F1} = u \text{ (Tc)},$$

$$\text{F1} = \text{F2} * v \text{ (Tc)},$$

ou encore

$$\text{F1} = \text{F2} * [1 + w \text{ (Tc)}],$$

où u, v, et *w* sont des fonctions monotones.

Le circuit CE de l'invention comprend un module de mesure MSR et un module de conversion CVRS qui permettent, en combinaison, de produire un signal $\Theta$c représentatif de la température Tc de ce circuit.

Pour ce faire, dans une première phase, le module de mesure MSR reçoit les deux signaux oscillants S1 et S2 et évalue la fréquence F1 du signal S1 à fréquence variable sur la base du signal oscillant S2 à fréquence fixe, pris comme référence ou étalon.

Par exemple, le module MSR compte le nombre n d'oscillations que produit le signal S1 à fréquence variable pendant une période de temps définie par l'apparition d'un nombre prédéterminé m d'oscillations du signal S2 à fréquence fixe.

Cependant, le module MSR peut aussi compter le nombre m d'oscillations que produit le signal S2 à fréquence fixe pendant une période de temps définie par l'apparition d'un nombre prédéterminé n d'oscillations du signal S1 à fréquence variable.

A l'issue de son traitement, le module de mesure MSR délivre un signal de mesure $\Phi$1 élaboré de façon à être représentatif de la fréquence F1 du signal S1.

Par exemple, dans les deux modes de réalisation précédemment évoqués, le module MSR peut délivrer un signal $\Phi$1 tel que :

$$\Phi1 = (n \, / \, m) * \text{F2}.$$

Puis, dans une deuxième phase, le module de conversion CVRS reçoit le signal de mesure $\Phi$1 et produit, en tant que signal de sortie, le signal $\Theta$c représentatif de la température Tc du circuit en déterminant, au moyen de la loi monotone telle que *u*, *v*, ou *w*, à quelle température correspond le signal de mesure $\Phi$1.

En d'autres termes, le module de conversion CVRS produit le signal $\Theta$c en tant que résultat d'une application, sur le signal de mesure $\Phi$1, d'une fonction de transfert inverse telle que $u^{-1}$, $v^{-1}$, ou $w^{-1}$, correspondant à la loi monotone *u*, *v*, ou *w*.

Par exemple, si le signal de mesure $\Phi$1 est élaboré par le module de mesure MSR pour être égal à :

$$\Phi1 = (n \, / \, m) * \text{F2},$$

alors le signal de sortie $\Theta$c est élaboré par le module CVRS pour être égal à :

$$\Theta\text{c} = u^{-1} \, (\Phi1),$$

où $u^{-1}$ est la fonction inverse de la fonction u précédemment définie.

Si le signal de mesure $\Phi$1 est élaboré par le module de mesure MSR pour être égal à :

$$\Phi1 = (n \, / \, m),$$

alors le signal de sortie $\Theta$c est élaboré par le module CVRS pour être égal à :

$$\Theta\text{c} = v^{-1} \, (\Phi1),$$

où $v^{-1}$ est la fonction inverse de la fonction v précédemment définie.

Si le signal de mesure $\Phi$1 est élaboré par le module de mesure MSR pour être égal à :

$$\Phi 1 = (n - m) / m,$$

alors le signal de sortie Θc est élaboré par le module CVRS pour être égal à :

$$\Theta c = w^{-1} (\Phi 1),$$

où $w^{-1}$ est la fonction inverse de la fonction w précédemment définie.

La forme de représentation qui utilise les fonctions $w$ et $w^{-1}$ est particulièrement avantageuse dans le cas où il existe une température To de fonctionnement possible du circuit CE pour laquelle les fréquences F1 et F2 sont égales.

Selon l'une de ses applications privilégiées, l'invention peut être utilisée pour permettre l'évaluation de la température Tc d'un circuit CE constitué par une carte à puce intelligente.

Dans ce cas, le signal de sortie Θc représentatif de la température Tc peut avantageusement être utilisé pour influer sur le mode de fonctionnement de cette carte à puce intelligente, par exemple pour la mettre hors service en cas de température excessive.

## Revendications

1. Circuit électronique (CE) doté d'un oscillateur (OSC_1) délivrant en fonctionnement un premier signal (S1) oscillant à une première fréquence (F1) variant, en fonction de la température (Tc) du circuit, suivant une loi monotone déterminée (u, v, w), ce circuit disposant en fonctionnement d'un deuxième signal (S2) oscillant à une deuxième fréquence (F2) connue et sensiblement indépendante de la température (Tc), **caractérisé en ce qu'**il comprend un module de mesure (MSR) recevant les premier et deuxième signaux oscillants (S1, S2) et délivrant un signal (Φ1) de mesure de la première fréquence (F1), obtenu en évaluant la première fréquence (F1) sur la base du deuxième signal oscillant (S2) pris comme référence ou étalon, et un module de conversion (CVRS) recevant le signal de mesure (Φ1) et produisant, en tant que signal de sortie (Θc) représentatif de la température (Tc) du circuit, le résultat d'une application, sur le signal de mesure (Φ1), d'une fonction de transfert inverse ($u^{-1}$, $v^{-1}$, $w^{-1}$) liée à ladite loi monotone (u, v, w), et **en ce qu'**il constitue une carte à puce intelligente adaptée à une communication au standard USB.

2. Circuit suivant la revendication 1, **caractérisé en ce qu'**il comprend un deuxième oscillateur (OSC_2), produisant le deuxième signal oscillant (S2).

3. Circuit suivant la revendication 1 ou 2, **caractérisé en ce que** les première et deuxième fréquences (F1, F2) sont égales pour une température de fonctionnement déterminée (To) du circuit (CE).

4. Procédé d'évaluation de la température d'un circuit électronique (CE) produisant en fonctionnement un premier signal (S1) oscillant à une première fréquence (F1) variant, en fonction de la température (Tc) du circuit, suivant une loi monotone déterminée (u, v, w), ce circuit (CE) produisant ou disposant en fonctionnement d'un deuxième signal (S2) oscillant à une deuxième fréquence connue (F2) et sensiblement indépendante de la température (Tc), **caractérisé en ce qu'**il comprend une première phase consistant à élaborer un signal (Φ1) de mesure de la première fréquence en mesurant la première fréquence (F1) au moyen du deuxième signal oscillant (S2), et une deuxième phase consistant à élaborer un signal de sortie (Θc) représentatif de la température (Tc) du circuit (CE) en déterminant, au moyen de ladite loi monotone (u, v, w), à quelle température correspond le signal de mesure (Φ1), ce procédé étant appliqué à un circuit constitué par une carte à puce intelligente adaptée à une communication au standard USB.

5. Procédé suivant la revendication 4, **caractérisé en ce que** le signal (Φ1) de mesure de la première fréquence est élaboré au moins en comptant le nombre (n) d'oscillations que produit le premier signal oscillant (S1) pendant une période de temps définie par l'apparition d'un nombre prédéterminé (m) d'oscillations du deuxième signal oscillant (S2).

6. Procédé suivant la revendication 4, **caractérisé en ce que** le signal (Φ1) de mesure de la première fréquence est élaboré au moins en comptant le nombre (m) d'oscillations que produit le deuxième signal oscillant (S2) pendant une période de temps définie par l'apparition d'un nombre prédéterminé (n) d'oscillations du premier signal oscillant (S1).

7. Application du procédé suivant l'une quelconque des revendications 4 à 6 à l'évaluation de la température (Tc) d'une carte à puce intelligente (CE).

8. Application suivant la revendication 7, dans laquelle le signal de sortie (Θc) représentatif de la température (Tc) de la carte à puce intelligente (CE) est utilisé pour influer sur un mode de fonctionnement de cette carte (CE).

**Fig. 1**

**Fig. 2**

**Fig. 3A**

**Fig. 3B**

**Fig. 4A**

**Fig. 4B**

**Office européen des brevets**

## RAPPORT DE RECHERCHE EUROPEENNE

Numéro de la demande

EP 05 29 1701

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 2003/155903 A1 (GAUTHIER CLAUDE ET AL) 21 août 2003 (2003-08-21) * alinéas [0017], [0023], [0025] - [0028] * | 1-8 | G01K7/01 |
| X | WO 99/61873 A (MICROCHIP TECH INC) 2 décembre 1999 (1999-12-02) * page 6, ligne 16 - ligne 20; figures * | 1-8 | |
| A | DE 101 14 825 C (INFINEON TECHNOLOGIES AG) 10 octobre 2002 (2002-10-10) * alinéas [0010] - [0013], [0025] - [0029] * | 1-8 | |
| A | US 5 795 068 A (CONN JR ROBERT O) 18 août 1998 (1998-08-18) * le document en entier * | 1-8 | |
| A | FR 2 032 336 A (INT STANDARD ELECTRIC CORP) 27 novembre 1970 (1970-11-27) * page 3, ligne 34 - page 4, ligne 13; figures 1-4 * | 1-8 | |

**DOMAINES TECHNIQUES RECHERCHES (Int.Cl.7)**

G01K

Le présent rapport a été établi pour toutes les revendications

| Lieu de la recherche | Date d'achèvement de la recherche | Examinateur |
|---|---|---|
| La Haye | 13 octobre 2005 | de Bakker, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................................

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 05 29 1701

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-10-2005

| Document brevet cité au rapport de recherche | | Date de publication | Membre(s) de la famille de brevet(s) | | Date de publication |
|---|---|---|---|---|---|
| US 2003155903 | A1 | 21-08-2003 | AUCUN | | |
| WO 9961873 | A | 02-12-1999 | EP | 1000331 A1 | 17-05-2000 |
| | | | JP | 2002516986 T | 11-06-2002 |
| | | | US | 6078208 A | 20-06-2000 |
| DE 10114825 | C | 10-10-2002 | US | 2002173930 A1 | 21-11-2002 |
| US 5795068 | A | 18-08-1998 | US | 6002991 A | 14-12-1999 |
| FR 2032336 | A | 27-11-1970 | CH | 515494 A | 15-11-1971 |
| | | | DE | 1907056 A1 | 19-11-1970 |
| | | | ES | 376447 A1 | 16-04-1972 |

EPO FORM P0460

Pour tout renseignement concernant cette annexe : voir Journal Officiel de l'Office européen des brevets, No.12/82